# EUROPÄISCHE PATENTSCHRIFT

(11) **EP 4 330 319 B1**
(45) Veröffentlichungstag und Bekanntmachung des Hinweises auf die Patenterteilung: **18.11.2026**
(21) Anmeldenummer: 22724772.3
(22) Anmeldetag: 25.04.2022
(51) Int. Cl.: C08J 7/04, B05D 5/06, C08K 3/34, C08K 9/02, C09C 1/00, C09D 5/29, C09D 5/32, C09D 7/40, C09D 7/62

(54) **RADAR-FÄHIGES KUNSTSTOFFTEIL**
PLASTIC PARTS WITH RADAR CAPABILITY
PIÈCE EN PLASTIQUE COMPATIBLE AVEC LE RADAR

(30) Priorität: 26.04.2021 EP 21170442
(43) Veröffentlichungstag der Anmeldung: 06.03.2024
(73) Patentinhaber: SUSONITY Commercial GmbH, 64579 Gernsheim (DE)
(72) Erfinder: GUMSHEIMER, Udo, 64293 Darmstadt (DE); KAISER, Kevin, 64293 Darmstadt (DE)
(74) Vertreter: Weckenbrock, Matthias
(86) Internationale Anmeldenummer: PCT/EP2022/060807
(87) Internationale Veröffentlichungsnummer: WO 2022/229044

(56) Entgegenhaltungen:
- WO-A1-2012/100805
- DE-A1- 102007 062 945
- DE-A1- 102009 029 763
- US-A1- 2016 340 518

## Beschreibung

Die vorliegende Erfindung bezieht sich auf ein Radar-fähiges Kunststoffteil, welches eine Oberfläche aufweist, die mit einer farbgebenden Beschichtung versehen ist, welche frei ist von Metalleffektpigmenten, auf ein Verfahren zur Herstellung eines solchen Radar-fähigen Kunststoffteils sowie auf dessen Verwendung, insbesondere im Fahrzeugbau.

Mit der Zunahme von Fahrzeugen, die ein autonomes Fahren ermöglichen, ist es nötig, in bisher ungeahntem Umfange Radargeräte in die entsprechenden Automobilteile zu integrieren, die sowohl die Abstandsmessung zu anderen Fahrzeugen oder Verkehrshindernissen sowie das Messen der Geschwindigkeit anderer Verkehrsteilnehmer ermöglichen. Solche Radargeräte sind in der Regel hinter Stoßstangen von Fahrzeugen verbaut, um die optische Erscheinung des Fahrzeuges nicht negativ zu beeinträchtigen.

Seit vielen Jahren gehören Metalliclacke, vorzugsweise silberfarbene Metalliclacke, zu den beliebtesten Fahrzeuglacken, insbesondere für den privaten Fahrzeugsektor. In Bezug auf die optische Ausgestaltung von Verkleidungsteilen für im Inneren von solchen Fahrzeugen verbaute Radargeräte stellen diese Metalliclacke jedoch eine große Herausforderung dar, weil die üblichen Metalliclacke, die auf Aluminium basierende Metalleffektpigmente enthalten, die Radarwellen, die üblicherweise im Frequenzbereich von 76-81 GHz liegen, in einem solchen Maße reflektieren, dämpfen oder absorbieren können, dass der Einsatz von bisher gebräuchlichen Metallic-Fahrzeuglacken für Verkleidungsteile von Radargeräten in Fahrzeugen zu einer unerwünschten Minderung der Funktionalität der Radargeräte führen würde.

Es hat daher nicht an Versuchen gefehlt, Lösungen für die Verkleidung von Radargeräten in Fahrzeugen bereitzustellen, die das optische Erscheinungsbild der Fahrzeuge nicht beeinträchtigen und eine gute Funktionalität der eingebauten Radargeräte ermöglichen.

Entsprechende Verkleidungsteile, die beispielsweise als Kühlergrille oder Firmenembleme ausgebildet sind und weitestgehend Radarwellendurchgängige Teilbereiche und metallisierte Streben aufweisen, besitzen häufig Schichten aus aufgedampften Metallen wie Indium. Solche Bauteile zeigen meist ein chromartiges optisches Erscheinungsbild.

Derartige Beschichtungen eignen sich jedoch nicht für Fahrzeugteile, die, obwohl sie sich im Strahlengang eines Radargerätes befinden, beim Betrachter den optischen Eindruck eines üblichen silberfarbenen Metalliclackes hinterlassen sollen. Dabei besteht die Schwierigkeit darin, den bei Metallpigment-haltigen Metalliclacken üblichen starken Helligkeitsflopp zu erzielen (deutlicher Wechsel von hell zu dunkel bei wechselndem Beleuchtungs- oder Betrachtungswinkel), das Deckvermögen solcher Metalliclacke weitestgehend zu erreichen, sowie die Dämpfung der Radarwellen in einem solchen Ausmaß zu reduzieren, dass die Transmission der Radarwellen ausreicht, ein eingebautes Radargerät voll funktionstüchtig betreiben zu können.

Aus JP 2004-244516 A ist ein glänzendes Produkt mit hoher Durchlässigkeit von elektromagnetischer Strahlung bekannt, welches als Kühlergrill, aber auch als Teilstück eines anderen Fahrzeugteils, beispielsweise einer Heckklappe, eingesetzt werden kann. Eine Schicht auf einem Polycarbonat-Panel kann hier Metallpartikel wie Zink, Zinn oder Indium enthalten, kann aber stattdessen auch mit Interferenzpigmenten wie beispielsweise mit Titandioxid beschichtetem Glimmer pigmentiert sein. Die Partikel werden in einer Konzentration von 3 bis 8 Gew.-% in einer Polyurethanhaltigen Schicht auf dem Panel aufgebracht. Als Rückseitenbeschichtung wird darauf ein schwarzer Basislack aufgetragen.

Das erhaltene glänzende Produkt aus mehreren Schichten soll eine hohe Durchlässigkeit elektromagnetischer Strahlung sowie einen hohen Glanz aufweisen.

Mit Interferenzpigmenten aus mit Titandioxid beschichtetem Glimmer in solchen Beschichtungen lässt sich zwar eine gute Durchlässigkeit von Radarwellen erzielen, das Deckvermögen von Metallpigment-haltigen Metallic-Lackierungen und der mit letzteren erzielbare starke metallische Helligkeitsflopp ist mit solchen einfach aufgebauten, transparenten und farblosen Glimmer-basierten Interferenzpigmenten allein jedoch nicht annähernd erhältlich.

Auch aus JP 2006-282886 A ist eine Radarwellen-durchlässige Beschichtung für ein Fahrzeugteil bekannt, die in einer Schicht auf einem Kunststoffsubstrat Interferenzpigmente enthält und auf Metalleffektpigmente verzichtet. Die Interferenzpigmente sollen, um eine Farbvarianz der Beschichtung zu ermöglichen, auf besonders glatten Substratpartikeln basieren. Siliziumdioxid- oder Aluminiumoxidsubstratplättchen werden als geeignete Substratplättchen vorgeschlagen. Der optische Eindruck einer Metallic-Lackierung kann aber mit einer derartige Interferenzpigmente enthaltenden Schicht auf einem zu beschichtenden Kunststoffsubstrat ebenfalls nicht erzielt werden.

DE 10 2009 029763 A1 betrifft ein Kunststoff-Karosseriebauteil zur Abdeckung eines Fahrzeugradarsystems. Offenbart werden mehrschichtige Konstruktionen und Beschichtungen (Basis und Deck-Effektschicht) mit geringer Signaldämpfung im Frequenzbereich von 75 bis 85 GHz. Ferner wird auf eine mehrschichtige Ausgestaltung mit Kunststofffolien, insbesondere PET-Folien, hingewiesen.

Die Aufgabe der vorliegenden Erfindung besteht darin, ein Radar-fähiges, beschichtetes Kunststoffteil zur Verfügung zu stellen, welches zur Anwendung für Verkleidungsteile von Radargeräten, insbesondere im Fahrzeugbau, geeignet ist und in seiner farbgebenden Beschichtung auf übliche Metalleffektpigmente, insbesondere Aluminiumpigmente, verzichtet, sich vorzugsweise optisch von üblichen silberfarbenen Metalliclackierungen geringstmöglich unterscheidet und insbesondere ein silberfarbenes metallisches Aussehen, ein hohes Deckvermögen und einen starken Helligkeitsflopp bei guter Durchlässigkeit von Radarwellen aufweist.

Eine weitere Aufgabe der vorliegenden Erfindung besteht darin, ein Verfahren zur Herstellung des oben genannten Radar-fähigen, beschichteten Kunststoffteils zur Verfügung zu stellen.

Darüber hinaus besteht eine weitere Aufgabe der vorliegenden Erfindung darin, die Verwendung eines solchen beschichteten Kunststoffteils aufzuzeigen.

Die Aufgabe der vorliegenden Erfindung wird gelöst durch ein Radar-fähiges, beschichtetes Kunststoffteil, wobei das Kunststoffteil eine optional vorbeschichtete und/oder vorbehandelte Oberfläche aufweist, die mit einer farbgebenden Beschichtung versehen ist, die frei ist von Metalleffektpigmenten und plättchenförmige Effektpigmente mit absorbierenden Eigenschaften enthält, wobei die farbgebende Beschichtung aus mehreren übereinander angeordneten Lagen besteht, wobei die plättchenförmigen Effektpigmente in jeder Lage enthalten sind und mindestens zwei der Lagen voneinander verschiedene geometrische Schichtdicken aufweisen, und wobei die Oberfläche des Kunststoffteils keine weitere farbgebende oder metallische Beschichtung aufweist,
wobei die plättchenförmigen Effektpigmente auf einem plättchenförmigen, transparenten Trägermaterial mindestens eine Schicht aufweisen, die ein Eisenoxid, ein Mischoxid aus Eisenoxid und Titanoxid, ein Titansuboxid oder Titanoxynitrid enthält oder daraus besteht, oder eine Schicht aufweisen, die Kohlenstoff enthält oder daraus besteht, wobei die farbgebende Beschichtung in jeder Lage der Beschichtung plättchenförmige Effektpigmente in einer Konzentration im Bereich von 5 bis 40 Gew.-%, bezogen auf das Trockengewicht Gewicht der jeweiligen Lage der Beschichtung, enthält, wobei Radar-fähig eine Beschichtung bedeutet, die bei Beaufschlagung mit elektromagnetischen Wellen mit einer Peak-Frequenz von 76,5 GHz eine Permittivität von <30 aufweist.

Außerdem wird die Aufgabe der vorliegenden Erfindung auch durch ein Verfahren zur Herstellung eines solchen beschichteten Radar-fähigen Kunststoffteils gelöst, wobei auf einer optional vorbeschichteten und/oder vorbehandelten Oberfläche eines Kunststoffteils eine farbgebende Beschichtung aufgebracht wird, die frei ist von Metalleffektpigmenten und plättchenförmige Effektpigmente mit absorbierenden Eigenschaften enthält, wobei die farbgebende Beschichtung in mehreren übereinander angeordneten Lagen aufgebracht wird, wobei die plättchenförmigen Effektpigmente mit absorbierenden Eigenschaften in jeder Lage enthalten sind und mindestens zwei der Lagen voneinander verschiedene geometrische Schichtdicken aufweisen, wobei nach dem Aufbringen jeder Lage eine Trocknung erfolgt, und wobei die Oberfläche des Kunststoffteils mit keiner weiteren farbgebenden oder metallischen Beschichtung versehen wird,
wobei die plättchenförmigen Effektpigmente auf einem plättchenförmigen, transparenten Trägermaterial mindestens eine Schicht aufweisen, die ein Eisenoxid, ein Mischoxid aus Eisenoxid und Titanoxid, ein Titansuboxid oder Titanoxynitrid enthält oder daraus besteht, oder eine Schicht aufweisen, die Kohlenstoff enthält oder daraus besteht,
wobei die farbgebende Beschichtung in jeder Lage der Beschichtung plättchenförmige Effektpigmente in einer Konzentration im Bereich von 5 bis 40 Gew.-%, bezogen auf das Trockengewicht Gewicht der jeweiligen Lage der Beschichtung, enthält, wobei Radar-fähig eine Beschichtung bedeutet, die bei Beaufschlagung mit elektromagnetischen Wellen mit einer Peak-Frequenz von 76,5 GHz eine Permittivität von <30 aufweist.

Die Aufgabe der Erfindung wird auch durch die Verwendung eines wie oben beschriebenen beschichteten Kunststoffteils als Radar-fähiges Fahrzeugteil gelöst.

Die nunmehrigen Erfinder haben überraschend gefunden, dass es möglich ist, Verkleidungsteile von Radargeräten im Fahrzeugbau zur Verfügung zu stellen, die eine farbgebende Beschichtung aufweisen, in der plättchen-förmige Effektpigmente enthalten sind, wobei die farbgebende Beschichtung insgesamt frei ist von Metalleffektpigmenten, aber optisch einen silberfarbenen Metalliccharakter aufweisen kann.

Obwohl plättchenförmige Effektpigmente, die keine Metallschichten aufweisen, in Beschichtungen in der Regel nicht zu einer starken Dämpfung des Radarsignals führen, zeigen sie üblicherweise wenig oder keine Eigenabsorption und nur ein geringes Deckvermögen. Diese Eigenschaften bewirken, dass eine deckende, silberfarbene Beschichtung mit hohem Glanz und einem starken Helligkeitsflopp, wie er für Metallic-lackierungen charakteristisch ist, ausschließlich mit den üblichen plättchenförmigen Effektpigmenten, bei denen es sich meist um Interferenzpigmente handelt, im Standardbeschichtungsverfahren für Automobile nicht erzielbar ist.

Es galt daher herauszufinden, unter welchen Bedingungen farbgebende Beschichtungen auf Verkleidungsteilen für Radargeräte im Fahrzeugbau erhalten werden können, die die Anforderungen an Deckvermögen, Helligkeitsflopp und Radar-Fähigkeit weitestgehend erfüllen, ohne dass Metalleffektpigmente in der Beschichtung enthalten sind, das optische Erscheinungsbild einer Metallic-Lackierung auf dem jeweiligen Kunststoffteil durch die farbgebende Beschichtung jedoch in hinreichendem Maße imitiert werden kann.

Die nunmehrigen Erfinder haben ein beschichtetes Kunststoffteil mit einer farbgebenden Beschichtung gefunden, welches die genannten Bedingungen gut erfüllt.

Die farbgebende Beschichtung auf der Oberfläche eines Kunststoffteils besteht erfindungsgemäß aus mehreren übereinander angeordneten Lagen, die vorzugsweise jeweils vollflächig übereinander angeordnet sind und die Oberfläche des Kunststoffteils bedecken. Dabei kann die Oberfläche des Kunststoffteils optional vorbeschichtet und/oder vorbehandelt sein. Dabei handelt es sich vorzugsweise um die im Fahrzeugbau üblichen Vorbeschichtungen mit einer Primerschicht und/oder einer Füllstoffschicht, oder auch um eine alternative oder zusätzliche elektrostatische Vorbehandlung der jeweiligen Oberfläche. Derartige Vorbeschichtungen und/oder Vorbehandlungen können die Haftung, Güte und Haltbarkeit der nachfolgenden farbgebenden Beschichtung, nicht jedoch deren optisch wahrnehmbare Farbgestaltung beeinflussen.

In der farbgebenden Beschichtung der Oberfläche des Radar-fähigen Kunststoffteils gemäß der vorliegenden Erfindung enthält jede der einzelnen Lagen plättchenförmige Effektpigmente mit absorbierenden Eigenschaften, ist jedoch frei von Metalleffektpigmenten. Mindestens zwei der Lagen der farbgebenden Beschichtung weisen voneinander verschiedene geometrische Schichtdicken auf. Darüber hinaus ist die Oberfläche des Kunststoffteils außer mit der genannten mehrlagigen farbgebenden Beschichtung mit keiner weiteren farbgebenden Beschichtung und ebenfalls mit keiner metallischen Beschichtung versehen, letztere weder als aufgedampfte Metallschicht noch als Bindemittel-haltige Beschichtung mit Metalleffektpigmenten oder anderen Metallpigmenten.

Erfindungsgemäß ist die farbgebende Beschichtung des Radar-fähigen Kunststoffteils mehrlagig aufgebaut und weist vorzugsweise zwei bis vier übereinander angeordnete Lagen auf. Dabei ist es vorteilhaft, wenn die farbgebende Beschichtung eine erste Lage aufweist, die sich unmittelbar auf der optional vorbeschichteten und/oder vorbehandelten Oberfläche des Kunststoffteils befindet und eine geometrische Schichtdicke aufweist, die größer ist als die geometrische Schichtdicke jeder einzelnen der auf dieser ersten Lage angeordneten weiteren Lagen der farbgebenden Beschichtung.

Besonders bevorzugt weist diese erste Lage eine geometrische Schichtdicke auf, welche größer ist als die Summe der geometrischen Schichtdicken aller weiteren Lagen der farbgebenden Beschichtung. Dabei ist es ebenfalls besonders bevorzugt, wenn alle weiteren Lagen außer der ersten Lage jeweils dieselbe geometrische Schichtdicke aufweisen.

Bei den plättchenförmigen Effektpigmenten mit absorbierenden Eigenschaften in der farbgebenden Beschichtung auf der Oberfläche des erfindungsgemäßen Kunststoffteils handelt es sich vorzugsweise um plättchenförmige Effektpigmente, die eine silbergraue Absorptionsfarbe aufweisen.

Die optische Wirkung plättchenförmiger Interferenzpigmente besteht in der Regel aus einer Kombination von Reflexions- und Transmissionserscheinungen von Licht an einer Abfolge von dünnen Schichten, aus denen solche Effektpigmente, meist auf einem plättchenförmigen Trägermaterial, in der Regel bestehen. Sehr häufig werden hier lediglich farblose und weitestgehend für sichtbares Licht transparente Materialien eingesetzt, wie beispielsweise plättchenförmige Glimmerpigmente, die mit Titandioxid beschichtet sind. Solche Pigmente können eine silberne Interferenzfarbe oder auch bunte Interferenzfarben aufweisen, sind insgesamt aber transparent und besitzen keine Körperfarbe.

Absorbierende Eigenschaften und damit eine Körperfarbe erhalten Interferenzpigmente (solche Pigmente werden nachfolgend als plättchen-förmige Effektpigmente mit absorbierenden Eigenschaften bezeichnet), wenn entweder der plättchenförmige Träger oder aber mindestens eine der Schichten, die sich auf dem plättchenförmigen Träger befinden, aus einem Material besteht, welches eine Eigenfarbe, d.h. eine Absorptionsfarbe, aufweist. Dabei kann es sich um farbige Metalloxide, Metallsuboxide, Metalloxynitride, Metallmischoxide oder sauerstoffdefizitäre Metalloxide bzw. um Metalloxidhydrate handeln. Absorbierende Eigenschaften erhalten Interferenzpigmente auch durch Schichten, die organische Farbpigmente enthalten.

Gemäß der vorliegenden Erfindung werden in der farbgebenden Beschichtung plättchenförmige Effektpigmente mit silbergrauer Absorptionsfarbe eingesetzt, die auf einem plättchenförmigen, transparenten Trägermaterial mindestens eine Schicht aufweisen, die ein Eisenoxid (Fe(II) und/oder Fe(III)), ein Mischoxid aus Eisenoxid und Titanoxid, ein Titansuboxid oder Titanoxynitrid enthält oder daraus besteht, oder eine Schicht aufweisen, die Kohlenstoff enthält oder daraus besteht. Ein oder mehrere andere Schichten aus farblosen, transparenten Materialien können sich zusätzlich auf dem plättchenförmigen Trägermaterial befinden.

Als Eisenoxide bzw. Eisenoxidhydrat kommen Fe₂O₃, FeO, Fe₃O₄ oder FeOOH in Betracht. Bei Mischoxiden von Eisenoxid und Titanoxid handelt es sich häufig um Ilmenit (FeTiO₃ ) oder Pseudobrookit (Fe₂TiO₅). Als Titansuboxide kommen TiO, Ti₂O₃, Ti₃O₅, Ti₄O₇, Ti₂O, Ti₃O oder Ti₆O infrage.

Die Schichtdicken der absorbierenden Schichten, die ein Eisenoxid, ein Mischoxid aus Eisenoxid und Titanoxid, Titanoxynitrid oder ein Titansuboxid enthalten, oder der Schicht, die Kohlenstoff enthält oder aus Kohlenstoff besteht, sind dabei so eingestellt, dass das Effektpigment eine silbergraue Absorptionsfarbe aufweist. Alle anderen auf dem Trägermaterial gegebenenfalls vorhandenen Schichten leisten dagegen keinen Beitrag zur Absorptionsfarbe.

Als weitere farblose transparente Schichten auf dem plättchenförmigen Trägermaterial sind insbesondere Schichten aus farblosen Metalloxiden oder Metalloxidhydraten geeignet, wie Zinnoxid, Titandioxid, Zirkoniumoxid, Siliziumdioxid, Siliziumoxidhydrat, Aluminiumoxid oder Aluminiumoxidhydrat.

Als plättchenförmige Trägermaterialien kommen natürlicher oder synthetischer Glimmer, Kaolin, Talk oder Sericit, darüber hinaus auch Glas, Calcium-Aluminium-Borosilikat, SiO₂, TiO₂ oder Al₂O₃ in Betracht. Vorzugsweise werden als plättchenförmige Trägermaterialien natürlicher oder synthetischer Glimmer oder Al₂O₃-Plättchen eingesetzt.

Plättchenförmige Effektpigmente der genannten Art sind kommerziell verfügbar. Sie sind beispielsweise von der Merck KGaA unter den Handelsnamen Iriodin^{®} 9602 Silver-Grey SW, Iriodin^{®} 9605 Blue Shade Silver SW oder Iriodin^{®} 9612 Silver-Grey Fine Satin SW erhältlich. Diese basieren auf Glimmerplättchen und weisen mindestens eine Schicht auf, die ein Eisenoxid oder ein Titansuboxid enthält.

Es können bevorzugt auch plättchenförmige Effektpigmente mit absorbierenden Eigenschaften eingesetzt werden, die auf einem transparenten Trägerplättchen ein oder mehrere Interferenzschichten und als abschließende Schicht eine sehr dünne, lichtdurchlässige Schicht aufweisen, die aus Kohlenstoff besteht. Solche Pigmente sind beispielsweise in der Patentanmeldung EP 3795645 A1 der jetzigen Patentanmelderin beschrieben worden.

Es hat sich herausgestellt, dass Effektpigmente mit silbergrauer Absorptionsfarbe besonders gut für den Einsatz als plättchenförmige Effektpigmente mit absorbierenden Eigenschaften in der farbgebenden Beschichtung geeignet sind, da letztere eine silbermetallische Optik aufweisen soll. Durch den Pigmentaufbau in Form von Abfolgen dünner Schichten auf plättchenförmigen Substraten zeigen solche Effektpigmente einen optisch wahrnehmbaren Glanz, wenn eingestrahltes Licht darauf fällt. Die silbergraue Absorptionsfarbe bewirkt eine ausreichend hohe Helligkeit bei direktem Lichteinfall.

Diese plättchenförmigen Effektpigmente mit absorbierenden Eigenschaften weisen im allgemeinen Partikelgrößen im Bereich von 1 bis 100 µm, insbesondere von 2 bis 70 µm und besonders bevorzugt im Bereich von 3 bis 20 µm auf. Die Dicke der Effektpigmente liegt im Bereich von 0,1 bis 2 µm.

Die Partikelgröße der plättchenförmigen Effektpigmente kann mittels Laserdiffraktometrie bestimmt werden. Vorzugsweise wird die Partikelgröße sowie die Partikelgrößenverteilung mit einem Gerät der Firma Malvern (Malvern Mastersizer 3000, APA300, Produkt der Firma Malvern Instruments Ltd., UK) im Standardbetrieb volumenbezogen ermittelt. Übliche Partikelgrößenverhältnisse sind jedoch auch in den Angaben der Hersteller in öffentlich zugänglichen Produktinformationsblättern zu finden.

In diesem Größenbereich kann ein ausreichend gutes Deckvermögen der farbgebenden Beschichtung erhalten werden, wenn die Menge der Effektpigmente mit absorbierenden Eigenschaften und die Gesamtschichtdicke der farbgebenden Beschichtung erfindungsgemäß eingestellt werden.

Es kann auch vorteilhaft sein, plättchenförmige Effektpigmente mit absorbierenden Eigenschaften in Mischungen einzusetzen, bei denen die eingesetzten Effektpigmente unterschiedliche Partikelgrößen aufweisen. Erfindungsgemäß beträgt die Mindestmenge an plättchenförmigen Effektpigmenten mit absorbierenden Eigenschaften in jeder der einzelnen Lagen der farbgebenden Beschichtung 5 Gew.-%, bezogen auf das Gewicht jeder der (festen) einzelnen Lagen. Die Höchstmenge an plättchenförmigen Effektpigmenten mit absorbierenden Eigenschaften in jeder der einzelnen Lagen der farbgebenden Beschichtung beträgt 40 Gew.-%, bezogen auf das Gewicht der jeweiligen Lage. Vorzugsweise werden diese Effektpigmente in jeder Lage der farbgebenden Beschichtung in einer Konzentration von 10 bis 30 Gew.-%, bezogen auf das jeweilige Gewicht (Trockengewicht) der Lage, eingesetzt.

Es ist besonders bevorzugt, wenn der Gehalt an und die Art der plättchenförmigen Effektpigmente(n) mit absorbierenden Eigenschaften in jeder einzelnen Lage der farbgebenden Beschichtung gleich ist, da sich dadurch das Verfahren zur Herstellung der erfindungsgemäß beschichteten Kunststoffkörper merklich vereinfacht und ungewollte Farbabweichungen der Gesamtbeschichtung verhindert werden können.

In einer ersten Ausführungsform der vorliegenden Erfindung sind außer den plättchenförmigen Effektpigmenten mit absorbierenden Eigenschaften keine weiteren plättchenförmigen Effektpigmente in der farbgebenden Beschichtung enthalten.

In einer zweiten Ausführungsform der vorliegenden Erfindung liegen die plättchenförmigen Effektpigmente mit absorbierenden Eigenschaften in der farbgebenden Beschichtung im Gemisch mit plättchenförmigen Effektpigmenten ohne absorbierende Eigenschaften vor. Dabei liegt das Verhältnis von plättchenförmigen Effektpigmenten mit absorbierenden Eigenschaften zu plättchenförmigen Effektpigmenten ohne absorbierende Eigenschaften im Bereich von 2:1 bis 10:1. Vorzugsweise liegt ein derartiges Gemisch in jeder einzelnen Lage der mehrlagigen farbgebenden Beschichtung vor und das Mischungsverhältnis ist in jeder Lage gleich, insbesondere auch unter Verwendung derselben plättchenförmigen Effektpigmente in jeder Lage.

Als plättchenförmige Effektpigmente ohne absorbierende Eigenschaften sind insbesondere Interferenzpigmente mit silbergrauer Interferenzfarbe geeignet.

Diese basieren auf transparenten, farblosen, plättchenförmigen Trägermaterialien wie natürlicher oder synthetischer Glimmer, Kaolin, Talk oder Sericit, oder auf Glas, Calcium-Aluminium-Borosilikat, SiO₂, TiO₂ oder Al₂O₃. Vorzugsweise werden als plättchenförmige Trägermaterialien natürlicher oder synthetischer Glimmer oder Al₂O₃-Plättchen eingesetzt.

Die plättchenförmigen Trägermaterialien sind mit einer oder mehreren Schichten aus transparenten, farblosen Metalloxiden oder Metalloxidhydraten beschichtet, wie Zinnoxid, Titandioxid, Zirkoniumoxid, Siliziumdioxid, Siliziumoxidhydrat, Aluminiumoxid oder Aluminiumoxidhydrat. Plättchen-förmige Effektpigmente dieser Art weisen lediglich eine Interferenzfarbe und keine Körperfarbe auf.

Es kommen handelsübliche Interferenzpigmente in Frage, die von verschiedenen Herstellern angeboten werden. Vorzugsweise werden Interferenzpigmente mit silbergrauer Interferenzfarbe eingesetzt. Beispielhaft kann hier Iriodin^{®} 9103 Rutile Sterling Silver SW der Firma Merck KGaA genannt werden.

Die plättchenförmigen Effektpigmente ohne absorbierende Eigenschaften weisen Partikelgrößen im Bereich von 1 bis 250 µm, insbesondere von 2 bis 100 µm auf. Die Dicke dieser Effektpigmente liegt im Bereich von 0,1 bis 2 µm.

Wenn gemäß der zweiten Ausführungsform der vorliegenden Erfindung ein Gemisch von plättchenförmigen Effektpigmenten in der farbgebenden Beschichtung eingesetzt wird, beträgt der Mindestanteil an plättchenförmigen Effektpigmenten mit absorbierenden Eigenschaften in jeder Lage der farbgebenden Beschichtung 5 Gew.%, bezogen auf das Gewicht der jeweiligen Lage, wie vorab bereits beschreiben. Vorzugsweise beträgt der Anteil an plättchenförmigen Effektpigmenten mit absorbierenden Eigenschaften in jeder Lage mindestens 10 Gew.%, bei einem Gesamtanteil an plättchenförmigen Effektpigmenten mit und ohne absorbierende Eigenschaften von höchstens 40 Gew.%, jeweils bezogen auf das Gewicht der jeweiligen Lage, und unter Beachtung der oben genannten Mischungsverhältnisse.

Wie bereits vorab beschrieben werden vorzugsweise dieselben plättchenförmigen Effektpigmente in den jeweils gleichen Gewichts- und Mischungsverhältnissen in jeder der Lagen der farbgebenden Beschichtung eingesetzt.

Die geometrische Gesamtschichtdicke der farbgebenden Beschichtung liegt erfindungsgemäß im Bereich von 8 bis 25 µm, vorzugsweise im Bereich von 10 bis 20 µm.

Wenn es zweckmäßig erscheint, kann die farbgebende Beschichtung auch ein oder mehrere so genannte Absorptionspigmente enthalten, solange dadurch die optischen Messwerte der Beschichtung, beispielsweise für das Deckvermögen (ΔE*), die Helligkeit (L*15) sowie den Helligkeitsflopp (Flop-Index), nicht nachteilig beeinflusst werden.

Als Absorptionspigmente kommen organische beziehungsweise anorganische Pigmente mit absorbierenden Eigenschaften infrage. Dabei handelt es sich im Wesentlichen um die klassischen organischen Absorptionspigmente beziehungsweise anorganischen Absorptionspigmente. Hierfür können alle üblicherweise in verschiedenen industriellen Beschichtungen eingesetzten Absorptionspigmente verwendet werden. Diese liegen vorzugsweise mit einem Partikeldurchmesser im Bereich von 10 bis 500 nm, insbesondere von 10 bis < 100 nm, vor. Präparationen von Absorptionspigmenten sind allgemein kommerziell verfügbar. Je nach Verträglichkeit mit den eingesetzten Lacksystemen kommen beispielsweise Systeme wie Heucotint^{®} W (Heubach, DE), Heucotint^{®} UN (Heubach, DE), MIPA WBC (Mipa, DE), Standoblue^{®} (Standox GmbH, DE), Standohyd^{®} (Standox GmbH, DE), Vocaflex^{®} (Arichemie, DE), Vocaplast^{®} (Arichemie, DE), oder auch andere in Betracht.

Als Absorptionspigmente sind beispielsweise Isoindolidone, Benzimidazole, Chinacridone, Cu-Phthalocyanine, Perylene, Ruß und/oder Titandioxid geeignet, um nur einige zu nennen. Farbige Absorptionspigmente können in geeigneten Mischungen eingesetzt werden um eine neutrale, unbunte Farbgebung zu erhalten.

Üblicherweise werden Weiß, Grau oder Schwarz in Fachkreisen nicht als Farben bezeichnet, weil es sich hier um unbunte optische Erscheinungen handelt, die lediglich die Menge des absorbierten Lichtes der jeweiligen Oberfläche bezeichnen. In der vorliegenden Erfindung sollen, davon abweichend, Weiß, Grau und Schwarz jedoch als Farben bezeichnet werden. Insofern kann gemäß der vorliegenden Erfindung auch die Beschichtung auf der Oberfläche des erfindungsgemäßen Kunststoffteils als "farbgebend" bezeichnet werden, obwohl es sich bei der hier vorzugsweise angestrebten "Farbigkeit" um einen optisch silbrigen Metalliceindruck handelt, der als "Silbergrau" beschrieben werden kann und damit eine Mischung aus weiß und schwarz darstellt, wenn der Glanzfaktor außer Acht gelassen wird.

Die optische Gesamtwirkung der erfindungsgemäßen mehrlagigen, farbgebenden Beschichtung auf der Oberfläche des Kunststoffteils ergibt einen homogenen silbermetallischen Gesamteindruck der erfindungsgemäßen Beschichtung mit für den Anwendungszweck hohem Deckvermögen, hohem Glanz und deutlichem Helligkeitsflopp.

Dabei wird das Deckvermögen anhand der ΔE*-Werte bestimmt, die bei spektralfotometrischer Vermessung von beschichteten Substraten im L*,a*,b*-Farbraum ermittelt werden können. Die Größe ΔE* ist dabei definiert als der Farbabstand von Proben im L*a*b*-Farbraum über standardisiertem schwarzem und weißem Untergrund bei einem Beleuchtungswinkel von 45° und einem Beobachtungswinkel von 75° und wird bestimmt nach der Formel: $ΔE * = √ \left({ΔL}^{* 2}+{Δa}^{* 2}+{Δb}^{* 2}\right) .$

Je geringer der Wert für den Farbabstand ausfällt, umso besser deckt die Beschichtung den Untergrund ab. Eine vollständige Abdeckung des Untergrundes kann mit nichtmetallischen Effektpigmenten in der Regel nicht erhalten, im vorliegenden Falle jedoch weitestgehend erreicht werden. Die erfindungsgemäß eingesetzte farbgebende Beschichtung weist einen ΔE*-Wert im Bereich von 0 bis 3, vorzugsweise im Bereich von 0 bis 1, auf, wenn sie mit einer Schichtdicke im Bereich von 14±2 µm auf den schwarz-weißen Untergrund aufgebracht und unter den oben genannten Messbedingungen vermessen wird. Diese Werte weisen auf ein für die Zwecke der vorliegenden Erfindung sehr gutes Deckvermögen der farbgebenden Beschichtung hin.

Als Maß für die Helligkeit einer Schicht gilt in Fachkreisen der L*15-Wert einer Beschichtung, der fotometrisch im L*,a*,b*-Farbraum auf standardisiertem schwarz-weißem Untergrund bei einem Beleuchtungswinkel von 45° und bei einem Beobachtungswinkel von 15° ermittelt wird. Um als erfindungsgemäße Beschichtung geeignet zu sein, soll diese eine Mindesthelligkeit aufweisen, die sowohl über einer weißen als auch über einer schwarzen Basisschicht erhalten wird.

Beim Einsatz der oben genannten Effektpigmente mit silbergrauer Absorptionsfarbe in der farbgebenden Beschichtung wird eine farbgebende Beschichtung erhalten, die, wenn sie vollflächig auf schwarz-weißem Untergrund mit einer Schichtdicke von 14±2 µm aufgebracht ist und im L*,a*,b*-Farbraum unter einem Beleuchtungswinkel von 45° und bei einem Beobachtungswinkel von 15° spektralfotometrisch vermessen wird, auf dem beschichteten weißen Untergrund und auf dem beschichteten schwarzen Untergrund jeweils eine Helligkeit L*15 von mindestens 80 aufweist.

Darüber hinaus ist auch ein guter Helligkeitsflopp erzielbar. Dieser wird standardmäßig als Flop-Index ausgewiesen und bei einem Beleuchtungswinkel von 45° spektralfotometrisch im Abstand von 15°, 45° und 110° aspecular vom Glanzwinkel ermittelt. Daher liegt erfindungsgemäß der Flop-Index auf schwarz beschichtetem Untergrund im Bereich von mindestens 12, wenn die farbgebende Beschichtung, wenn sie vollflächig auf schwarz-weißem Untergrund mit einer Schichtdicke von 14±2 µm aufgebracht ist und im L*,a*,b*-Farbraum unter einem Beleuchtungswinkel von 45° und bei Beobachtungswinkeln von 45°: as15°, 45°: as45° und 45°: as110° spektralfotometrisch vermessen wird.

Der Flop-Index gilt fachüblich als Maß für den Helligkeitsflopp bei wechselndem Betrachtungswinkel und wird bestimmt nach der Formel: $Flop Index = \frac{2 , 69 {\left({{L}^{*}}_{15 °}-{{L}^{*}}_{110 °}\right)}^{1 , 11}}{{\left({{L}^{*}}_{45 °}\right)}^{0 , 86}}$

Weder bei der Helligkeit L*15 noch beim Flop-Index ist die Angabe von oberen Grenzwerten sinnvoll, da beide Größen offene Obergrenzen aufweisen und Messergebnisse, die über den angegebenen Mindestwerten liegen, sich bei der Einhaltung eines Deckvermögens in angegebenen Bereich in jedem Falle positiv auf das optische Gesamtresultat auswirken.

Einzelheiten zu den spektralfotometrischen Messverfahren und -geräten sind im Beispielteil beschrieben.

Überraschenderweise hat sich herausgestellt, dass eine mehrlagige farbgebende Beschichtung auf einem Kunststoffsubstrat gemäß der vorliegenden Erfindung im Vergleich mit einer einlagigen Beschichtung gleicher Gesamtschichtdicke (Trockenschichtdicke) und bezüglich der farbgebenden Pigmente identischer Pigmentierung sowohl im Hinblick auf die Helligkeit als auch in Bezug auf den Helligkeitsflopp, ausgewiesen durch den Flop-Index, deutlich bessere Eigenschaften zeigt. Dadurch eröffnet sich die Eignung eines erfindungsgemäß beschichteten Kunststoffteils zur Anwendung als Verkleidungsteil für Radargeräte in Fahrzeugen. Die farbgebende Beschichtung des erfindungsgemäßen Kunststoffteils ist optisch einer klassischen Metallic-Beschichtung sehr ähnlich. Gleichzeitig ist durch das Vermeiden von Effektpigmenten, die aus Metallen bestehen oder Metallschichten enthalten, eine gute Durchlässigkeit von Radarwellen gewährleistet, sodass die im Fahrzeuginneren verbauten Radargeräte gleichzeitig unsichtbar sind und in ihrer Funktion nicht unzulässig beeinträchtigt werden.

Die farbgebende Beschichtung auf dem Kunststoffteil gemäß der vorliegenden Erfindung besteht aus zwei oder mehreren, vorzugsweise aus drei oder vier, übereinander angeordneten Lagen. Die Gesamttrockenschichtdicke der farbgebenden Beschichtung liegt dabei im Bereich von 8 bis 25 µm.

Vorzugsweise beträgt die Trockenschichtdicke der ersten Lage der farbgebenden Beschichtung, die sich unmittelbar auf der Oberfläche des erfindungsgemäßen Kunststoffteils befindet, mindestens 5 µm, vorzugsweise größer oder gleich 8 µm, und stellt die Lage der farbgebenden Beschichtung mit der größten Trockenschichtdicke dar (die Oberfläche des Kunststoffteils kann optional vorbeschichtet und/oder vorbehandelt sein, wie vorab beschrieben, wobei die Vorbehandlung und/oder Vorbeschichtung den wahrnehmbaren Farbeindruck nicht bestimmt).

Alle weiteren Lagen der farbgebenden Beschichtung weisen vorzugsweise geringere Trockenschichtdicken als die erste Lage auf und mindestens eine der Lagen, vorzugsweise zwei oder drei der Lagen, weisen eine Trockenschichtdicke von jeweils < 5 µm auf. Insbesondere beträgt die Trockenschichtdicke mindestens einer der weiteren Lagen ≤ 4 µm bzw. ≤ 3 µm, besonders bevorzugt etwa 2 µm. Diese extrem geringen Schichtdicken können insbesondere bei zwei oder drei der weiteren Lagen vorhanden sein, wobei es ganz besonders bevorzugt ist, wenn alle Lagen außer der ersten Lage dieselbe geringe Trockenschichtdicke aufweisen.

Um derart dünne mehrlagige Schichtaufbauten zu einer optisch attraktiven farbgebenden Beschichtung auf einem Kunststoffteil kombinieren zu können, sind glatte Oberflächen der einzelnen Lagen vonnöten. Diese ergeben sich aus Grenzflächen zwischen den einzelnen Lagen der farbgebenden Beschichtung, die weitestgehend parallel zur Oberfläche des Kunststoffteils angeordnet sind. Die Grenzflächen werden durch Zwischentrocknung nach dem Auftrag jeder der einzelnen Lagen der farbgebenden Beschichtung erhalten. Durch die Zwischentrocknung werden die plättchenförmigen Effektpigmente mit und, in der zweiten Ausführungsform, auch die plättchenförmigen Effektpigmente ohne absorbierende Eigenschaften in jeder der einzelnen Lagen mit ihren Hauptachsen annähernd parallel zur Oberfläche des Kunststoffteils bzw. der Vorbeschichtung auf der Oberfläche des Kunststoffteils, ausgerichtet und erzielen damit eine gute Reflexion des eingestrahlten Lichtes in jeder einzelnen Lage der farbgebenden Beschichtung.

Die Pigmentbeladung der einzelnen Lagen liegt dabei ebenfalls bei mindestens 5 Gew.-% an plättchenförmigen Effektpigmenten mit absorbierenden Eigenschaften und beträgt maximal 40 Gew.% an plättchenförmigen Effektpigmenten insgesamt, jeweils bezogen auf das Gewicht der einzelnen Lage. Vorzugsweise werden 10 bis 30 Gew.% an plättchenförmigen Effektpigmenten mit absorbierenden Eigenschaften in jeder der Lagen der farbgebenden Beschichtung eingesetzt.

Unter "Radar-fähig" im Sinne der vorliegenden Erfindung ist eine Beschichtung zu verstehen, die bei Beaufschlagung mit elektromagnetischen Wellen mit einer Peak-Frequenz von 76,5 GHz eine Permittivität von < 30 aufweist. Des Weiteren ist es erforderlich, dass die Beschichtung auf einem 350 µm PET-Substrat bei Beaufschlagung mit elektromagnetischen Wellen mit einer Peak-Frequenz von 76,5 GHz eine Ein-Wege-Transmissionsdämpfung von < 2 dB aufweist.

Die Messung der Permittivität der Beschichtung sowie der Ein-Wege-Transmissionsdämpfung der Beschichtung auf dem Substrat erfolgt mit einem Gerät vom Typ RMS-D-77/79G der Firma perisens GmbH, Deutschland, im Standardbetrieb.

Als Bindemittel für die farbgebende Beschichtung können alle üblichen Bindemittel und Bindemittelsysteme eingesetzt werden, die im verfestigten Zustand transparent erscheinen. Es kann hierbei auf alle gängigen Bindemittelarten zurückgegriffen werden, die in üblichen Beschichtungsverfahren eingesetzt werden und mit den eingesetzten Pigmenten verträglich sind. Lösemittelbasierende Bindemittelsysteme, wässrige Bindemittelsysteme sowie strahlenhärtende Bindemittelsysteme sind gleichermaßen einsetzbar, sofern fachübliche Besonderheiten bei der Pigmentauswahl und hinsichtlich des Beschichtungsverfahrens beachtet werden.

Die farbgebende Beschichtung kann weitere fachübliche Additive wie beispielsweise Füllstoffe, Inhibitoren, Flammschutzmittel, Gleitmittel, Rheologiehilfsmittel, Dispergiermittel, Redispergiermittel, Entschäumer, Verlaufsmittel, Filmbildner, Haftvermittler, Trocknungsbeschleuniger, Fotoinitiatoren, etc. enthalten.

Bei einer gewünschten Trockenschichtdicke der zweiten und ggf. jeder weiteren Lage der farbgebenden Beschichtung im Bereich von < 5µm ist der Einsatz von Rheologiehilfsmitteln in der Regel angezeigt. Als Rheologiehilfsmittel kommen dabei Stoffe wie beispielsweise BaSO₄, Polyamidpulver, Silikate oder andere, dem Fachmann geläufige Rheologiehilfsmittel, insbesondere aber auf Cellulose basierende Nanofasern in Betracht. Letztere werden besonders bevorzugt eingesetzt. Diese Rheologiehilfsmittel gestatten die Ausbildung zusammenhängender, besonders dünner pigmenthaltigen Schichten auf der jeweilig zu beschichtenden Oberfläche.

Je nach eingesetztem Bindemittelsystem enthalten die zur Herstellung der farbgebenden Beschichtung eingesetzten Beschichtungszusammensetzungen gegebenenfalls auch organische Lösemittel und/oder Wasser, die nach der Verfestigung bzw. Trocknung der einzelnen Lagen jedoch nicht mehr in der farbgebenden Beschichtung des erfindungsgemäßen Kunststoffteils enthalten sind. Die fachüblichen Lösemittelsysteme können ohne Beschränkungen eingesetzt werden.

Entsprechende Zusammensetzungen für Bindemittelsysteme, einschließlich Lösemitteln und Additiven, sind dem Fachmann hinlänglich bekannt und sind teilweise in unpigmentiertem Zustand auch als Fertigprodukte kommerziell erhältlich. Eine entsprechende Auswahl kann der Fachmann auf der Basis der einzusetzenden jeweiligen Pigmentierung und des gewünschten Beschichtungsverfahrens treffen.

Als Kunststoffteil, auf dem die mehrlagige farbgebende Beschichtung aufgebracht ist, kommen Platten oder Folien aus Kunststoff in Betracht, wenn die Beschichtung Radar-fähig sein soll. Dabei können die üblicherweise im Automobilbau verwendeten Kunststoffe zum Einsatz kommen, beispielsweise Substrate aus Polycarbonat (PC), Polypropylen (PP), Polyurethan (PUR), Polymethylmethacrylat (PMMA), AcrylnitrilButadien-Styrol (ABS) oder Acrylnitril-Ethylen-Styrol (AES), um nur einige zu nennen. Solche Kunststoffplatten oder Kunststofffolien weisen eine gewisse Grunddämpfung des Radarsignals auf, die durch die darauf befindliche farbgebende Beschichtung nur eine geringfügige Erhöhung erfahren sollte. In Bezug auf die Radarfähigkeit des erfindungsgemäßen Kunststoffteils ist der Wert der Grunddämpfung des Radarsignals hinsichtlich der Ein-Wege-Transmission, die durch das jeweilige Kunststoff-Substrat vorhanden ist, in den Messwerten enthalten. Die alleinig durch das Kunststoff-Substrat verursachte Grunddämpfung der Ein-Wege-Transmission des Radarsignals ist in Beispiel 4 gesondert aufgeführt. Eine Messung der allein durch die Beschichtung verursachten Dämpfung des Radarsignals ist aus apparatetechnischen Gründen nicht möglich. Soll die farbgebende Beschichtung aus rein optischen Gründen auf beliebigen Substraten aufgebracht werden und steht die Radar-Fähigkeit der Beschichtung nicht im Fokus, können selbstverständlich auch metallische oder metallhaltige Substrate eingesetzt werden.

Es versteht sich von selbst, dass die Kunststoffteile je nach Einsatzzweck dreidimensional geformt sein können, also eine dreidimensionale äußere Form aufweisen können. So weist beispielsweise eine Kunststoffplatte, die ein Teilstück einer Heckklappe eines Fahrzeugs bilden soll, selbstverständlich eine andere dreidimensionale äußere Form auf als eine als Stoßdämpfer vorgesehene Kunststoffplatte. In der Regel wird die dreidimensionale Form des Kunststoffteils vor dem Aufbringen der farbgebenden Beschichtung mittels üblicher Verformungsverfahren erzeugt. Unverzichtbares Kernelement des erfindungsgemäßen Kunststoffteils ist die mehrlagige farbgebende Beschichtung wie vorab beschrieben. Darüber hinaus können sich optional zwischen der Kunststoff-Oberfläche des Kunststoffteils und der ersten Lage der farbgebenden Beschichtung und/oder oberhalb der farbgebenden Beschichtung noch weitere Schichten befinden, die ebenfalls Teil des erfindungsgemäßen Kunststoffteils sein können.

Bei einer oder mehreren Schicht(en) die sich optional zwischen der Kunststoff-Oberfläche des Kunststoffteils und der farbgebenden Beschichtung befinden können, handelt es sich, wie vorab bereits beschrieben, um Primerschichten oder Füllstoffschichten. Solche zusätzlichen Schichten werden im Automobilbau häufig eingesetzt, um wahlweise die Haftung der Lackschichten auf dem jeweiligen Untergrund und/oder die mechanische und chemische Festigkeit der Lackschichten zu verbessern. Es handelt sich dabei um Grundierschichten, die den optisch wahrnehmbaren Farbeindruck des beschichteten Kunststoffteils nicht bestimmen. Auf der Oberfläche der farbgebenden Beschichtung wird dagegen vorzugsweise zur Verbesserung der Witterungsbeständigkeit der farbgebenden Beschichtung noch eine äußerste Schicht aufgebracht. Eine solche Schicht wird gewöhnlich als Klarlackschicht bezeichnet und ist in der Regel transparent und farblos ausgebildet, kann jedoch auch geringste Mengen an Pigmenten enthalten. Vorteilhafterweise kann das Kunststoffteil gemäß der vorliegenden Erfindung eine Grundierschicht (Primerschicht) und/oder eine Klarlackschicht aufweisen. Erfindungsgemäß können hier alle üblichen Materialien eingesetzt werden, die in breitem Umfange technisch benutzt werden und daher keiner weiteren Erörterung bedürfen.

Das erfindungsgemäß beschichtete Kunststoffteil ist überall dort vorteilhaft einsetzbar, wo Radargeräte mit Verkleidungen versehen werden sollen, die optisch eine silberfarbene Effektlackierung aufweisen, ohne dass die Funktionalität der Radargeräte nachteilig beeinflusst wird. Das trifft selbstverständlich insbesondere auf Verkleidungsteile zu, die im Fahrzeugbau Verwendung finden. Daher handelt es sich bei dem erfindungsgemäß beschichteten Kunststoffteil vorzugsweise um ein Fahrzeugteil. Die farbgebende Beschichtung als solche lässt sich auf Grund ihrer guten optischen Eigenschaften selbstverständlich auch für Lackierungen aller Art verwenden, die optisch weitestgehend einer üblichen silberfarbenen Metalliclackierung entsprechen sollen. Dabei kann die vorhandene Radarwellendurchlässigkeit auch eine untergeordnete Rolle spielen und die entsprechenden Einsatzgebiete sind nicht auf den Fahrzeugbau beschränkt.

Gegenstand der vorliegenden Erfindung ist auch ein Verfahren zur Herstellung eines Radar-fähigen Kunststoffteils wobei auf einer optional vorbeschichteten und/oder vorbehandelten Oberfläche eines Kunststoffteils eine farbgebende Beschichtung aufgebracht wird, die frei ist von Metalleffektpigmenten und plättchenförmige Effektpigmente mit absorbierenden Eigenschaften enthält, wobei die farbgebende Beschichtung in mehreren übereinander angeordneten Lagen aufgebracht wird, die plättchenförmigen Effektpigmente mit absorbierenden Eigenschaften in jeder Lage enthalten sind und mindestens zwei der Lagen voneinander verschiedene geometrische Schichtdicken aufweisen, wobei nach dem Aufbringen jeder Lage eine Trocknung erfolgt, und wobei die Oberfläche des Kunststoffteils mit keiner weiteren farbgebenden oder metallischen Beschichtung versehen wird.

Alle materiellen Details in Bezug auf die geeigneten Kunststoffteile sowie die stoffliche Zusammensetzung der mehrlagigen farbgebenden Beschichtung sind vorab bereits erläutert worden. Insofern wird hier darauf Bezug genommen.

Das Aufbringen der einzelnen Lagen der farbgebenden Beschichtung auf die Oberfläche des optional vorbeschichteten und/oder vorbehandelten Kunststoffteils kann mittels üblicher Beschichtungsverfahren erfolgen, beispielsweise per Sprühverfahren, Inmoldverfahren, Rollercoatingverfahren, Curtain-coating-Verfahren oder per elektrostatischem Auftragsvefahren.

Solche Beschichtungsverfahren sind großtechnisch üblich und können fachgemäß eingesetzt werden.

Vorzugsweise werden Sprühverfahren oder elektrostatische Auftragsverfahren eingesetzt.

Übliche Sprühtechnologien, bei denen mit einmaligem Sprühvorgang Trockenschichtdicken im Bereich von 5 bis 25 µm erhalten werden können, sind zur Herstellung der ersten Lage der farbgebenden Beschichtung geeignet. Dieser Auftragsschritt wird mit einer Zwischentrocknung abgeschlossen.

Für das Aufbringen der zweiten und ggf. jeder weiteren Lage der farbgebenden Beschichtung mit einer Trockenschichtdicke von < 5µm besonders geeignet sind jedoch Sprühverfahren, die in mehreren Arbeitsschritten nacheinander einen Auftrag von aufeinander angeordneten Lagen auf der ersten Lage der farbgebenden Beschichtung bei sehr geringer Trockenschichtdicke der einzelnen Lagen erlauben. Diese vorzugsweise ein bis drei Lagen werden jeweils nach dem Aufbringen jeder einzelnen Lage ebenfalls getrocknet, sodass Grenzflächen zwischen den einzelnen Teilschichten entstehen. Die Temperatur für die Trocknung der Einzelschichten ist dabei abhängig vom jeweiligen Bindemittelsystem und den eingesetzten Lösemitteln und beträgt mindestens 20°C. Temperaturen bis zu 150°C, vorzugsweise bis 100°C, können eingesetzt werden.

Die Menge an plättchenförmigen Effektpigmenten mit absorbierenden Eigenschaften in der farbgebenden Beschichtung beträgt dabei für jede der einzelnen Lagen mindestens 5 Gew.-%, bezogen auf das Gewicht der trockenen Lage, kann jedoch im Bereich von 10 bis 40 Gew.-%, insbesondere im Bereich von 10 bis 30 Gew.-%, liegen. Dabei beträgt die Trockenschichtdicke mindestens einer der Lagen < 5 µm, vorzugsweise ≤ 4 µm und insbesondere ≤ 3 µm oder ca. 2 µm. Vorzugsweise weisen zwei oder drei Lagen derart geringe Schichtdicken auf.

Die hohe Pigmentkonzentration in den jeweiligen Lagen der farbgebenden Beschichtung bei sehr niedriger Trockenschichtdicke der einzelnen Lagen lässt sich einstellen, indem der Anteil an Bindemitteln in der jeweiligen Beschichtungszusammensetzung sehr stark reduziert (ca. 6 bis 7 Gew.-% Feststoffgehalt) und der Lösemittelanteil (vorzugsweise Wasser) sehr stark angehoben wird. Damit eine solche, stark verdünnte Beschichtungszusammensetzung auf der zu beschichtenden Oberfläche einen geschlossenen Beschichtungsfilm ausbilden kann, werden verschiedene Hilfsstoffe, insbesondere Rheologiehilfsmittel, zugesetzt, die für die Einstellung einer geeigneten Viskosität der Beschichtungszusammensetzung sorgen, sodass diese mittels eines Sprühverfahrens auf dem Untergrund applizierbar ist und gute Verlaufseigenschaften zeigt. Im Zuge des nachfolgenden Trocknungsprozesses verbleibt eine geringe Feststoffmasse mit einem sehr hohen Anteil an plättchenförmigen Effektpigmenten als einzelne Lage auf dem jeweiligen Untergrund, in der die Effektpigmente mit ihren Hauptachsen auch gut und im Wesentlichen parallel ausgerichtet zur jeweiligen beschichteten Oberfläche vorliegen.

Als Rheologiehilfsmittel werden hier vorzugsweise Cellulose-basierende Nanofasern in einer Menge von 5 bis 20 Gew.-%, bezogen auf das Gewicht der jeweiligen Beschichtungszusammensetzung, zugesetzt.

Durch den Mehrfachauftrag von übereinander angeordneten einzelnen Lagen und die jeweilige Zwischentrocknung dieser Lagen können die plättchenförmigen Effektpigmente in der mehrlagigen farbgebenden Beschichtung besonders gut orientiert werden, sodass eine hohe Reflexion von eingestrahltem Licht an der Oberfläche der farbgebenden Beschichtung erhalten wird. Dadurch verbessert sich insbesondere der Helligkeitsflopp der farbgebenden Beschichtung, wobei gleichzeitig ein hohes Deckvermögen der Beschichtung sowie eine gute Gesamthelligkeit erzielt werden kann. Damit lässt sich mit plättchenförmigen Effektpigmenten mit absorbierenden Eigenschaften in der farbgebenden Beschichtung und ohne den Einsatz von Metallpigmenten aller Art in der Gesamtbeschichtung ein beschichtetes Kunststoffteil erhalten, dessen farbgebende Beschichtung optisch einer silberfarbenen Metalliclackierung weitestgehend entspricht, dabei aber eine gute Radar-Fähigkeit aufweist.

Die farbgebende Beschichtung wird mit einer Gesamttrockenschichtdicke aufgebracht, die vorzugsweise im Bereich von 8 bis 25 m liegt.

Insbesondere erfolgt das Aufbringen der farbgebenden Beschichtung als Sprühverfahren in zwei bis vier Teilschritten in der Weise, dass zwei bis vier Lagen nacheinander und jeweils aufeinander aufgebracht werden, wobei die Menge der plättchenförmigen Effektpigmente mit absorbierenden Eigenschaften in jeder der Lagen mindestens 5 Gew.-%, bezogen auf das Trockengewicht der jeweiligen Lage, beträgt, und wobei nach dem Aufbringen jeder Lage eine Trocknung bei einer Temperatur von mindestens 20° C durchgeführt wird.

Die Oberfläche der eingesetzten Kunststoffteile, die vordefinierte Radareigenschaften aufweisen, kann optional elektrostatisch vorbehandelt und/oder vorbeschichtet sein, beispielsweise mit einer oder mehreren Grundier- oder Füllstoffschichten, wie vorab bereits beschrieben. Um den Radar-fähigen Charakter der Gesamtbeschichtung zu gewährleisten ist jedoch darauf zu achten, dass keine der optional zusätzlich vorhandenen Schichten auf der Oberfläche des Kunststoffteils Metalleffektpigmente, andere Metallpigmente, Metallschichten oder andere Bestandteile enthält, die die nötige Radarwellen-Durchlässigkeit der gesamten Beschichtung stören könnten.

Eine Vorbeschichtung der Oberfläche des Kunststoffteils mit einer Grundierschicht (Primerschicht) ist vorteilhaft, weil solche Grundierschichten unter anderem die mechanische Stabilität der Gesamtbeschichtung sowie die Haftung der ersten Schicht des Schichtpaketes auf dem Substrat verbessern. Darüber hinaus sind äußerste Klarlackschichten, die in der Regel farblos und transparent für sichtbares Licht ausgebildet sind, vorteilhaft insbesondere für die mechanische Stabilität und die Witterungsbeständigkeit von Beschichtungen. Sie werden auch in der vorliegenden Erfindung bevorzugt auf der Oberfläche der farbgebenden Beschichtung als äußerste Schicht der Gesamtbeschichtung aufgebracht. Gelegentlich werden in technischen Anwendungen auch Klarlackschichten eingesetzt, die Absorptionspigmente oder Effektpigmente mit einer PMK von < 2 % enthalten. Solche Klarlackschichten sollen gemäß der vorliegenden Erfindung nicht als farbgebend bezeichnet werden und können auf der Oberfläche des erfindungsgemäßen Kunststoffteils ebenfalls eingesetzt werden.

Es ist selbstverständlich, dass die Gesamtbeschichtung mindestens einem Härtungsvorgang unterzogen wird, der entweder nach dem Aufbringen und Trocknen der farbgebenden Beschichtung und/oder nach dem Aufbringen der Klarlackschicht erfolgt. Das Aushärten von Beschichtungen auf Substraten einschließlich Kunststoffsubstraten, insbesondere im Automobilbereich, ist fachübliches Tun und muss nicht genauer beschrieben werden.

Gegenstand der vorliegenden Erfindung ist auch die Verwendung des vorab beschriebenen Kunststoffteils mit Metalleffektpigment-freier farbgebender Beschichtung als Fahrzeugteil, insbesondere als Radar-fähiges Fahrzeugteil. Es kann beispielsweise als äußeres Karosserieteil eingesetzt werden, welches als äußeres Verdeckungs- oder Verblendungsteil für im Fahrzeuginneren verbaute Radargeräte gedacht sind. Als Karosserieteile sind insbesondere Stoßstangen, Heckklappen, Kühlergrille, Kotflügel oder Teile von diesen zu nennen. Selbstverständlich kann die farbgebende Beschichtung auch auf andere als die genannten Fahrzeugteile und insbesondere auch auf metallhaltige Substrate aufgebracht werden, wenn lediglich das optische Erscheinungsbild einer Metalliclackierung von Interesse und die Radar-Fähigkeit nicht erforderlich ist. Im letzteren Falle ist das Anwendungsgebiet der Erfindung auch nicht auf den Fahrzeugbau beschränkt.

Die Erfindung soll nachfolgend an Beispielen erläutert, jedoch nicht auf diese beschränkt werden.

### Beispiele:

Zur Messung der optischen Eigenschaften der farbgebenden Beschichtung wird diese auf standardisierten schwarz-weiß beschichteten Leneta-Blechen (weiße und schwarze Standardbeschichtung auf der jeweiligen Teilfläche vorhanden) aufgebracht. Die Beschichtung erfolgt als pneumatische Sprühbeschichtung. Als Bindemittel wird die Zubereitung WBC 000 der MIPA SE, DE, eingesetzt. Abschließend werden alle Proben mit einer Standard-2K-Klarlackschicht beschichtet.

Für die farbgebende Beschichtung werden verschiedene Mischungen von plättchenförmigen Effektpigmenten eingesetzt.

| | |
|---|---|
| Effektpigment 1: | Effektpigment mit absorbierenden Eigenschaften auf Glimmerbasis mit Beschichtung aus SnO₂, TiO₂, Eisenoxid und Hilfsstoffen, Partikelgröße < 15 µm; silbergraue Absorptionsfarbe |
| Effektpigment 2: | Effektpigment ohne absorbierende Eigenschaften auf Glimmerbasis mit Beschichtung aus SnO₂, TiO₂ und Hilfsstoffen, Partikelgröße < 100 µm; silbergraue Interferenzfarbe |

Das Mischungsverhältnis in den Beschichtungszusammensetzungen beträgt:

| | |
|---|---|
| Zusammensetzung A: | Pigment 1: Pigment 2 = ca. 3:1 |
| Zusammensetzung A': | Pigment 1: Pigment 2 = ca. 3:1 |
| Zusammensetzung B: | Pigment 1: Pigment 2 = ca. 8:1 |
| Zusammensetzung B': | Pigment 1: Pigment 2 = ca. 8:1 |

Jede Zusammensetzung enthält zusätzlich klassische Absorptionspigmente (0,55 % in PMK enthalten).

### Beispiel 1:

Zur Bestimmung des Deckvermögens der farbgebenden Beschichtung werden die Beschichtungszusammensetzungen A, A', B und B' jeweils mit einer Pigmentmassekonzentration von 28 Gew.-%, bezogen auf das Gewicht der festen Beschichtung, sowohl in einem einmaligen Beschichtungsvorgang (Vergleich) als auch in einem erfindungsgemäßen Mehrschichtauftrag auf die standardisierten schwarz und weiß beschichteten Bleche aufgebracht und nach jedem Auftragsschritt bei 80°C 5 Minuten getrocknet. Beim erfindungsgemäßen Mehrschichtauftrag wird die farbgebende Beschichtung in vier Lagen aufgebracht (jeweils 28 Gew-% PMK, Schichtdicken 9, 2, 2, 2 µm, Trocknung jeweils 5 min. bei 80°C). Je geringer der Farbabstand ΔE* 75° ausfällt, umso besser ist das Deckvermögen der jeweiligen farbgebenden Beschichtung.

**Tabelle 1: Deckvermögen**

| Mischung | Lagen | Verfahren | PMK (%) | TSD (µm) | ΔE* 75° |
|---|---|---|---|---|---|
| A | 1 | pneumatisch | 28 | 15 | 0,65 |
| A' | 4 | pneumatisch | 28 | 15 | 0,55 |
| B | 1 | pneumatisch | 28 | 15 | 0,40 |
| B' | 4 | pneumatisch | 28 | 15 | 0,25 |

- Lagen:: Anzahl der Lagen farbgebenden Beschichtung
1 Lage: Vergleich
4 Lagen: Erfindung
- PMK:: Pigmentmassekonzentration an farbgebenden Pigmenten in jeder Lage
- TSD:: Trockenschichtdicke der gesamten farbgebenden Beschichtung
- L*:: Helligkeitswert L* im L*a*b*-Farbraum bei Beobachtungswinkel 15°, Beleuchtungswinkel 45°
- ΔE*:: Farbabstand von Proben im L*a*b*-Farbraum über standardisiertem schwarzem und weißem Untergrund (Beleuchtungswinkel 45°, Beobachtungswinkel 75°), bestimmt nach der Formel:$ΔE * = √ \left({ΔL}^{* 2}+{Δa}^{* 2}+{Δb}^{* 2}\right)$
- Flop-Index:: Maß für den Helligkeitsflopp bei wechselndem Betrachtungswinkel (Beleuchtungswinkel 45°, Betrachtungswinkel 45°: as15°, 45°: as45°, 45°: as110°), bestimmt nach der Formel:$Flop Index = \frac{2 , 69 {\left({{L}^{*}}_{15 °}-{{L}^{*}}_{110 °}\right)}^{1 , 11}}{{\left({{L}^{*}}_{45 °}\right)}^{0 , 86}}$

### Beispiel 2:

Zur Bestimmung der Helligkeit der jeweiligen Beschichtung werden die Beschichtungszusammensetzungen A, A', B und B' wie in Beispiel 1 auf den jeweiligen schwarzen Untergrund aufgebracht. Zusätzlich zum pneumatischen Sprühauftragsverfahren wird ein elektrostatisches Verfahren eingesetzt, weil elektrostatische Auftragsverfahren in OEM-Beschichtungsanlagen standardmäßig verwendet werden. Je größer die Helligkeitswerte L*15 ausfallen, umso besser kann eine Beschichtung, die lediglich mit Aluminiumpigmenten deckend pigmentiert ist, optisch nachgestellt werden.

**Tabelle 2: Helligkeit**

| Mischung | Lagen | Verfahren | PMK (%) | TSD (µm) | L* 15 |
|---|---|---|---|---|---|
| A | 1 | pneumatisch | 28 | 15 | 85 |
| A1' | 4 | pneumatisch | 28 | 15 | 91 |
| A | 1 | elektrostatisch | 28 | 15 | 75 |
| A' | 4 | elektrostatisch | 28 | 15 | 88 |
| B | 1 | pneumatisch | 28 | 15 | 74 |
| B' | 4 | pneumatisch | 28 | 15 | 84 |
| B | 1 | elektrostatisch | 28 | 15 | 67 |
| B' | 4 | elektrostatisch | 28 | 15 | 80 |

Mit jedem Beschichtungsverfahren und jeder der eingesetzten Effektpigmentmischungen können bei erfindungsgemäßem Aufbau der farbgebenden Schicht hohe Helligkeitswerte erhalten werden, die die Helligkeitswerte bei einmaligem Auftrag einer korrespondierenden Beschichtungszusammensetzung übersteigen.

### Beispiel 3:

Zur Bestimmung des Flop-Index werden alle in Beispiel 2 hergestellten Beschichtungen neu vermessen.

**Tabelle 3: Flop-Index**

| Mischung | Lagen | Verfahren | PMK (%) | TSD (µm) | Flop-Index |
|---|---|---|---|---|---|
| A | 1 | pneumatisch | 28 | 15 | 11,5 |
| A' | 4 | pneumatisch | 28 | 15 | 13,8 |
| A | 1 | elektrostatisch | 28 | 15 | 10,5 |
| A' | 4 | elektrostatisch | 28 | 15 | 14,0 |
| B | 1 | pneumatisch | 28 | 15 | 9,5 |
| B' | 4 | pneumatisch | 28 | 15 | 12,0 |
| B | 1 | elektrostatisch | 28 | 15 | 9,0 |
| B' | 4 | elektrostatisch | 28 | 15 | 12,5 |

Übliche Silbermetallic-Beschichtungen, die in der Regel Aluminiumpigmente enthalten, weisen Flop-Indizes im Bereich von ca. 12 bis 17 auf. Dieser Bereich kann von allen mit der farbgebenden Beschichtung gemäß der vorliegenden Erfindung versehenen Substraten erreicht werden.

Die colorimetrische Vermessung der Proben erfolgt mit einem Farbmessgerät vom Typ BYKMac i (Firma Byk-Gardner) im SMC5-Modus. Die hier als Substrat verwendeten schwarz-weißen Bleche genügen dem Standard ASTM E 1347 und werden unter der Bezeichnung Metopac T12G-Bleche von der Firma Leneta vertrieben.

Aus den Tabellen ist erkennbar, dass die farbgebenden Beschichtungen mit jeder der hier verwendeten Mischung aus plättchenförmigen Effektpigmenten mit silbergrauer Absorptionsfarbe und plättchenförmigen Effektpigmenten mit silbergrauer Interferenzfarbe und jeder der verwendeten Varianten des Beschichtungsverfahrens bei einem sehr hohen Deckvermögen eine gute Helligkeit sowie einen guten Helligkeitsflopp erzielen und daher in der Lage sind, metallische Beschichtungen, die Aluminiumpigmente enthalten, in guter bis sehr guter Weise optisch zu imitieren. Da in den Beschichtungen keine Metallpigmente enthalten sind, ist eine wesentliche Dämpfung von Radarwellen durch die jeweilige Beschichtung auf einem Kunststoffsubstrat nicht zu erwarten.

### Beispiel 4:

Zur Bestimmung der Durchlässigkeit von Radarwellen wird jeweils eine 350 µm starke PET-Folie (Hostaphan RN 350, Mitsubishi Polyester Film GmbH, DE) als Substrat eingesetzt. Die Beschichtung erfolgt als pneumatische Sprühbeschichtung. Als Bindemittel wird die Zubereitung WBC 000 der MIPA SE, DE, eingesetzt.

Als farbgebende Beschichtung wird jeweils eine Schicht mit den in Tabelle 4 aufgeführten Effektpigment-Mischungen mit silbergrauer Absorptions- bzw. silbergrauer Interferenzfarbe in jeweils einer oder vier Lagen aufgebracht und wie in Beispiel 1 beschrieben getrocknet.

In Tabelle 4 ist die Dielektrizitätskonstante (Permittivität) des jeweiligen Schichtaufbaus sowie die Dämpfung des Radarsignals in dB bei einmaligem Strahlendurchgang (76,5 GHz) dargestellt (Gerät: RMS-D-77/79G der Firma perisens GmbH, DE, Standardbetrieb).

Das unbeschichtete PET-Substrat weist eine Permittivität von etwa 3,0 und eine Radarwellendämpfung von 1,05 dB auf.

Eine Beschichtung aus einer einzelnen Schicht auf dem PET-Substrat, die handelsübliche Aluminiumpigmente enthält und eine PMK von 18 Gew.-% sowie eine TSD von ca. 22 µm aufweist, kommt zum Vergleich unter denselben Messbedingungen auf eine Permittivität von ca. 74,9 und eine Ein-Wege-Dämpfung des Radarsignals von ca. 4,5 dB.

**Tabelle 4: Durchlässigkeit von Radarwellen**

| Mischung | Lagen | PMK (%) | TSD (µm) | Permittivität | Dämpfung bei 76,5 GHz (dB) |
|---|---|---|---|---|---|
| A | 1 | 28 | 15 | 5,12 | 1,10 |
| A' | 4 | 28 | 15 | 5,04 | 1,10 |
| B | 1 | 28 | 15 | 4,81 | 1,10 |
| B# | 4 | 28 | 15 | 5,33 | 1,10 |

Das mehrstufige Beschichtungsverfahren verändert die Radarwellendurchlässigkeit einer lediglich mit metallfreien Effektpigmenten pigmentierten farbgebenden Beschichtung auf einem Kunststoffteil (hier Kunststofffolie) nicht nachteilig. Eine gute Radarwellendurchlässigkeit ist daher für das erfindungsgemäße Kunststoffteil gegeben.

## Patentansprüche

1. Radar-fähiges, beschichtetes Kunststoffteil, wobei das Kunststoffteil eine optional vorbeschichtete und/oder vorbehandelte Oberfläche aufweist, die mit einer farbgebenden Beschichtung versehen ist, welche frei ist von Metalleffektpigmenten und plättchenförmige Effektpigmente mit absorbierenden Eigenschaften enthält, **dadurch gekennzeichnet, dass** die farbgebende Beschichtung aus mehreren übereinander angeordneten Lagen besteht, wobei die plättchenförmigen Effektpigmente mit absorbierenden Eigenschaften in jeder Lage enthalten sind und mindestens zwei der Lagen voneinander verschiedene geometrische Schichtdicken aufweisen, und wobei die Oberfläche des Kunststoffteils keine weitere farbgebende oder metallische Beschichtung aufweist,
wobei die plättchenförmigen Effektpigmente auf einem plättchenförmigen, transparenten Trägermaterial mindestens eine Schicht aufweisen, die ein Eisenoxid, ein Mischoxid aus Eisenoxid und Titanoxid, ein Titansuboxid oder Titanoxynitrid enthält oder daraus besteht, oder eine Schicht aufweisen, die Kohlenstoff enthält oder daraus besteht,
wobei die farbgebende Beschichtung in jeder Lage der Beschichtung plättchenförmige Effektpigmente in einer Konzentration im Bereich von 5 bis 40 Gew.-%, bezogen auf das Trockengewichtder jeweiligen Lage der Beschichtung, enthält,
wobei radar-fähig eine Beschichtung bedeutet, die bei Beaufschlagung mit elektromagnetischen Wellen mit einer Peak-Frequenz von 76,5 GHz eine Permittivität von < 30 aufweist.

2. Radar-fähiges Kunststoffteil gemäß Anspruch 1, **dadurch gekennzeichnet, dass** die farbgebende Beschichtung zwei bis vier übereinander angeordnete Lagen aufweist.

3. Radar-fähiges Kunststoffteil gemäß Anspruch 1 oder 2, **dadurch gekennzeichnet, dass** die farbgebende Beschichtung eine erste Lage aufweist, welche sich unmittelbar auf der optional vorbeschichteten und/oder vorbehandelten Oberfläche des Kunststoffteils befindet und eine geometrische Schichtdicke aufweist, die größer ist als die geometrische Schichtdicke jeder einzelnen der auf der ersten Lage angeordneten weiteren Lagen.

4. Radar-fähiges Kunststoffteil gemäß einem oder mehreren der Ansprüche 1 bis 3, **dadurch gekennzeichnet, dass** außer den plättchenförmigen Effektpigmenten mit absorbierenden Eigenschaften keine weiteren plättchenförmigen Effektpigmente in der farbgebenden Beschichtung enthalten sind.

5. Radar-fähiges Kunststoffteil gemäß einem oder mehreren der Ansprüche 1 bis 3, **dadurch gekennzeichnet, dass** die plättchenförmigen Effektpigmente mit absorbierenden Eigenschaften im Gemisch mit plättchenförmigen Effektpigmenten ohne absorbierende Eigenschaften in der farbgebenden Beschichtung enthalten sind.

6. Radar-fähiges Kunststoffteil gemäß einem oder mehreren der Ansprüche 1 bis 5, **dadurch gekennzeichnet, dass** die farbgebende Beschichtung, wenn sie vollflächig auf schwarz-weißem Untergrund mit einer Gesamttrockenschichtdicke von 14±2 µm aufgebracht ist und im L*,a*,b*-Farbraum unter einem Beleuchtungswinkel von 45° und bei einem Beobachtungswinkel von 75° spektralfotometrisch vermessen wird, einen Farbabstand DE* zwischen dem beschichteten weißen Untergrund und dem beschichteten schwarzen Untergrund im Bereich von 0 bis 3 aufweist.

7. Radar-fähiges Kunststoffteil gemäß einem oder mehreren der Ansprüche 1 bis 6, **dadurch gekennzeichnet, dass** die farbgebende Beschichtung, wenn sie vollflächig auf schwarz-weißem Untergrund mit einer Gesamttrockenschichtdicke von 14±2 µm aufgebracht ist und im L*,a*,b*-Farbraum unter einem Beleuchtungswinkel von 45° und bei einem Beobachtungswinkel von 15° spektralfotometrisch vermessen wird, auf dem beschichteten weißen Untergrund und auf dem beschichteten schwarzen Untergrund jeweils eine Helligkeit L*15 von mindestens 80 aufweist.

8. Radar-fähiges Kunststoffteil gemäß einem oder mehreren der Ansprüche 1 bis 7, **dadurch gekennzeichnet, dass** die farbgebende Beschichtung, wenn sie vollflächig auf schwarz-weißem Untergrund mit einer Gesamttrockenschichtdicke von 14±2 µm aufgebracht ist und im L*,a*,b*-Farbraum unter einem Beleuchtungswinkel von 45° und bei Beobachtungswinkeln von 45°: as15°, 45°: as45° und 45°: as110° spektralfotometrisch vermessen wird, auf dem beschichteten schwarzen Untergrund jeweils einen Flop-Index von mindestens 12 aufweist.

9. Radar-fähiges Kunststoffteil gemäß einem oder mehreren der Ansprüche 1 bis 6, **dadurch gekennzeichnet, dass** die farbgebende Beschichtung als plättchenförmiges Effektpigment mit absorbierenden Eigenschaften ein Effektpigment enthält, welches eine silbergraue Absorptionsfarbe aufweist.

10. Radar-fähiges Kunststoffteil gemäß Anspruch 9, **dadurch gekennzeichnet, dass** es sich bei dem Effektpigment mit silbergrauer Absorptionsfarbe um ein Pigment handelt, welches auf einem transparenten plättchenförmigen Trägermaterial mindestens eine Schicht aufweist, die ein Eisenoxid, ein Titansuboxid, ein Titanoxynitrid oder ein Mischoxid aus Eisenoxid und Titanoxid enthält, oder eine Schicht aufweist, die Kohlenstoff enthält oder aus Kohlenstoff besteht.

11. Radar-fähiges Kunststoffteil gemäß einem oder mehreren der Ansprüche 1 bis 10, **dadurch gekennzeichnet, dass** die farbgebende Beschichtung eine Gesamttrockenschichtdicke im Bereich von 8 bis 25 µm aufweist.

12. Radar-fähiges Kunststoffteil gemäß einem oder mehreren der Ansprüche 1 bis 11, **dadurch gekennzeichnet, dass** es sich bei dem Kunststoffteil um eine Platte oder eine Folie aus Kunststoff handelt, wobei das Kunststoffteil optional eine dreidimensionale äußere Form aufweisen kann.

13. Radar-fähiges Kunststoffteil gemäß einem oder mehreren der Ansprüche 1 bis 12, **dadurch gekennzeichnet, dass** sich oberhalb der farbgebenden Beschichtung mindestens eine weitere Schicht befindet.

14. Radar-fähiges Kunststoffteil gemäß Anspruch 13, **dadurch gekennzeichnet, dass** es sich bei der weiteren Schicht um eine äußerste Klarlackschicht handelt.

15. Radar-fähiges Kunststoffteil gemäß einem oder mehreren der Ansprüche 1 bis 14, **dadurch gekennzeichnet, dass** die Oberfläche des Kunststoffteils mit einer Primerschicht und/oder einer Füllstoffschicht vorbeschichtet und/oder elektrostatisch vorbehandelt ist.

16. Verfahren zur Herstellung eines Radar-fähigen Kunststoffteils gemäß Anspruch 1 bis 15, **dadurch gekennzeichnet, dass** auf einer optional vorbeschichteten und/oder vorbehandelten Oberfläche eines Kunststoffteils eine farbgebende Beschichtung aufgebracht wird, die frei ist von Metalleffektpigmenten und plättchenförmige Effektpigmente mit absorbierenden Eigenschaften enthält, **dadurch gekennzeichnet, dass** die farbgebende Beschichtung in mehreren übereinander angeordneten Lagen aufgebracht wird, wobei die plättchenförmigen Effektpigmente mit absorbierenden Eigenschaften in jeder Lage enthalten sind und mindestens zwei der Lagen voneinander verschiedene geometrische Schichtdicken aufweisen, wobei nach dem Aufbringen jeder Lage eine Trocknung erfolgt, und wobei die Oberfläche des Kunststoffteils mit keiner weiteren farbgebenden oder metallischen Beschichtung versehen wird,
wobei die plättchenförmigen Effektpigmente auf einem plättchenförmigen, transparenten Trägermaterial mindestens eine Schicht aufweisen, die ein Eisenoxid, ein Mischoxid aus Eisenoxid und Titanoxid, ein Titansuboxid oder Titanoxynitrid enthält oder daraus besteht, oder eine Schicht aufweisen, die Kohlenstoff enthält oder daraus besteht,
wobei die farbgebende Beschichtung in jeder Lage der Beschichtung plättchenförmige Effektpigmente in einer Konzentration im Bereich von 5 bis 40 Gew.-%, bezogen auf das Trockengewicht der jeweiligen Lage der Beschichtung, enthält,
wobei Radar-fähig eine Beschichtung bedeutet, die bei Beaufschlagung mit elektromagnetischen Wellen mit einer Peak-Frequenz von 76,5 GHz eine Permittivität von < 30 aufweist.

17. Verfahren gemäß Anspruch 16, **dadurch gekennzeichnet, dass** die farbgebende Beschichtung mit einer Gesamttrockenschichtdicke im Bereich von 8 bis 25 µm aufgebracht wird.

18. Verfahren gemäß einem oder mehreren der Ansprüche 16 bis 17, **dadurch gekennzeichnet, dass** das Aufbringen der farbgebenden Beschichtung mittels eines Sprühverfahrens, Rollercoatingverfahrens, Curtain-coating-Verfahrens, Inmoldverfahrens oder per elektrostatischem Auftragsverfahren erfolgt.

19. Verfahren gemäß Anspruch 18, **dadurch gekennzeichnet, dass** das Aufbringen der farbgebenden Beschichtung als Sprühverfahren in zwei bis vier Teilschritten in der Weise erfolgt, dass zwei bis vier Lagen nacheinander und jeweils aufeinander aufgebracht werden, wobei die Menge der plättchenförmigen Effektpigmente mit absorbierenden Eigenschaften in jeder der Lagen mindestens 5 Gew.-%, bezogen auf das Trockengewicht der jeweiligen Lage, beträgt, und wobei nach dem Aufbringen jeder Lage eine Trocknung bei einer Temperatur von mindestens 20° C durchgeführt wird.

20. Verfahren gemäß einem oder mehreren der Ansprüche 16 bis 19, **dadurch gekennzeichnet, dass** mindestens eine der Lagen der farbgebenden Beschichtung eine Trockenschichtdicke von < 5 µm aufweist.

21. Verfahren gemäß einem oder mehreren der Ansprüche 16 bis 20, **dadurch gekennzeichnet, dass** die Oberfläche des Kunststoffteils mit einer Primerschicht und/oder Füllstoffschicht vorbeschichtet und/oder elektrostatisch vorbehandelt ist.

22. Verfahren gemäß einem oder mehreren der Ansprüche 16 bis 21, **dadurch gekennzeichnet, dass** auf der Oberfläche der farbgebenden Beschichtung eine Klarlackschicht als äußerste Schicht aufgebracht wird.

23. Verfahren gemäß einem oder mehreren der Ansprüche 16 bis 22, **dadurch gekennzeichnet, dass** es sich bei dem Kunststoffteil um eine Platte oder eine Folie aus Kunststoff handelt, wobei das Kunststoffteil optional eine dreidimensionale äußere Form aufweisen kann.

24. Verwendung eines Radar-fähigen Kunststoffteils gemäß einem oder mehreren der Ansprüche 1 bis 15 als Fahrzeugteil.

25. Fahrzeugteil, bestehend aus einem Radar-fähigen Kunststoffteil gemäß einem oder mehreren der Ansprüche 1 bis 15.

## Claims

1. Radar-capable, coated plastics part, wherein the plastics part has an optionally precoated and/or pretreated surface provided with a colour-imparting coating which is free of metal effect pigments and comprises platelet-shaped effect pigments having absorbing properties, **characterized in that** the colour-imparting coating consists of a plurality of laminas arranged one above another, wherein the platelet-shaped effect pigments having absorbing properties are present in each lamina and at least two of the laminas have different geometric layer thicknesses from one another, and wherein the surface of the plastics part does not have any further colour-imparting or metallic coating,
wherein the platelet-shaped effect pigments on a platelet-shaped, transparent support material have at least one layer which comprises or consists of an iron oxide, a mixed oxide of iron oxide and titanium oxide, a titanium suboxide or titanium oxynitride, or have a layer which comprises or consists of carbon,
wherein the colour-imparting coating in each lamina of the coating comprises platelet-shaped effect pigments in a concentration in the range from 5% to 40% by weight, based on the dry weight of the respective lamina of the coating,
wherein radar-capable denotes a coating which, when subjected to electromagnetic waves with a peak frequency of 76.5 GHz, has a permittivity of < 30.

2. Radar-capable plastics part according to Claim 1, **characterized in that** the colour-imparting coating has two to four laminas arranged one above another.

3. Radar-capable plastics part according to Claim 1 or 2, **characterized in that in that** the colour-imparting coating has a first lamina which is located directly on the optionally precoated and/or pretreated surface of the plastics part and has a geometric layer thickness which is greater than the geometric layer thickness of each individual one of the further laminas arranged on the first lamina.

4. Radar-capable plastics part according to one or more of Claims 1 to 3, **characterized in that**, apart from the platelet-shaped effect pigments having absorbing properties, no further platelet-shaped effect pigments are present in the colour-imparting coating.

5. Radar-capable plastics part according to one or more of Claims 1 to 3, **characterized in that** the platelet-shaped effect pigments having absorbing properties are present in the colour-imparting coating in a mixture with platelet-shaped effect pigments without absorbing properties.

6. Radar-capable plastics part according to one or more of Claims 1 to 5, **characterized in that** the colour-imparting coating, if it has been applied over the entire area to a black-and-white substrate with a total dry layer thickness of 14 ± 2 µm and is measured spectrophotometrically in the L*,a*,b* colour space at an illumination angle of 45° and at an observation angle of 75°, has a colour difference DE* between the coated white substrate and the coated black substrate in the range from 0 to 3.

7. Radar-capable plastics part according to one or more of Claims 1 to 6, **characterized in that** the colour-imparting coating, if it has been applied over the entire area to a black-and-white substrate with a total dry layer thickness of 14 ± 2 µm and is measured spectrophotometrically in the L*,a*,b* colour space at an illumination angle of 45° and at an observation angle of 15°, has a brightness L*15 of at least 80 in each case on the coated white substrate and on the coated black substrate.

8. Radar-capable plastics part according to one or more of Claims 1 to 7, **characterized in that** the colour-imparting coating, if it has been applied over the entire area to a black-and-white substrate with a total dry layer thickness of 14 ± 2 µm and is measured spectrophotometrically in the L*,a*,b* colour space at an illumination angle of 45° and at observation angles of 45°: asl5°, 45°: as45° and 45°: as110°, has a flop index of at least 12 in each case on the coated black substrate.

9. Radar-capable plastics part according to one or more of Claims 1 to 6, **characterized in that** the colour-imparting coating comprises, as platelet-shaped effect pigment having absorbing properties, an effect pigment having a silver-grey absorption colour.

10. Radar-capable plastics part according to Claim 9, **characterized in that** the effect pigment with silver-grey absorption colour is a pigment which, on a transparent platelet-shaped support material, has at least one layer which comprises an iron oxide, a titanium suboxide, a titanium oxynitride or a mixed oxide of iron oxide and titanium oxide, or has a layer which comprises carbon or consists of carbon.

11. Radar-capable plastics part according to one or more of Claims 1 to 10, **characterized in that** the colour-imparting coating has a total dry layer thickness in the range from 8 to 25 µm.

12. Radar-capable plastics part according to one or more of Claims 1 to 11, **characterized in that** the plastics part is a plate or a foil made of plastic, wherein the plastics part may optionally have a three-dimensional outer shape.

13. Radar-capable plastics part according to one or more of Claims 1 to 12, **characterized in that** at least one further layer is located above the colour-imparting coating.

14. Radar-capable plastics part according to Claim 13, **characterized in that** the further layer is an outermost clearcoat layer.

15. Radar-capable plastics part according to one or more of Claims 1 to 14, **characterized in that** the surface of the plastics part has been precoated with a primer layer and/or a filler layer and/or electrostatically pretreated.

16. Process for producing a radar-capable plastics part according to Claims 1 to 15, **characterized in that** a colour-imparting coating which is free of metal effect pigments and comprises platelet-shaped effect pigments having absorbing properties is applied to an optionally precoated and/or pretreated surface of a plastics part, **characterized in that** the colour-imparting coating is applied in a plurality of laminas arranged one above another, wherein the platelet-shaped effect pigments having absorbing properties are present in each lamina and at least two of the laminas have different geometric layer thicknesses from one another, wherein the application of each lamina is followed by drying, and wherein the surface of the plastics part is not provided with any further colour-imparting or metallic coating,
wherein the platelet-shaped effect pigments on a platelet-shaped, transparent support material have at least one layer which comprises or consists of an iron oxide, a mixed oxide of iron oxide and titanium oxide, a titanium suboxide or titanium oxynitride, or have a layer which comprises or consists of carbon,
wherein the colour-imparting coating in each lamina of the coating comprises platelet-shaped effect pigments in a concentration in the range from 5% to 40% by weight, based on the dry weight of the respective lamina of the coating,
wherein radar-capable denotes a coating which, when subjected to electromagnetic waves with a peak frequency of 76.5 GHz, has a permittivity of < 30.

17. Process according to Claim 16, **characterized in that** the colour-imparting coating is applied with a total dry layer thickness in the range from 8 to 25 µm.

18. Process according to one or more of Claims 16 to 17, **characterized in that** the colour-imparting coating is applied by means of a spraying process, roller coating process, curtain coating process, in-mould process or via an electrostatic application process.

19. Process according to Claim 18, **characterized in that** the application of the colour-imparting coating as a spraying process takes place in two to four partial steps in such a way that two to four laminas are applied one after another and in each case to one another, wherein the amount of the platelet-shaped effect pigments having absorbing properties in each of the laminas is at least 5% by weight, based on the dry weight of the respective lamina, and wherein, after the application of each lamina, drying is carried out at a temperature of at least 20°C.

20. Process according to one or more of Claims 16 to 19, **characterized in that** at least one of the laminas of the colour-imparting coating has a dry layer thickness of < 5 µm.

21. Process according to one or more of Claims 16 to 20, **characterized in that** the surface of the plastics part has been precoated with a primer layer and/or filler layer and/or electrostatically pretreated.

22. Process according to one or more of Claims 16 to 21, **characterized in that** a clearcoat layer is applied as the outermost layer to the surface of the colour-imparting coating.

23. Process according to one or more of Claims 16 to 22, **characterized in that** the plastics part is a plate or a foil made of plastic, wherein the plastics part may optionally have a three-dimensional outer shape.

24. Use of a radar-capable plastics part according to one or more of Claims 1 to 15 as a vehicle part.

25. Vehicle part consisting of a radar-capable plastics part according to one or more of Claims 1 to 15.

## Revendications

1. Pièce en matière plastique revêtue, transparente au radar, **caractérisée en ce que** la pièce en matière plastique présente une surface éventuellement pré-revêtue et/ou pré-traitée, qui est pourvue d'un revêtement coloré exempt de pigments à effet métallique et de pigments à effet plaquettaires présentant des propriétés absorbantes, **caractérisée en ce que** le revêtement coloré est constitué de plusieurs couches disposées l'une au-dessus de l'autre, les pigments à effet plaquettaire présentant des propriétés absorbantes étant contenus dans chaque couche et au moins deux des couches présentant des épaisseurs de couches géométriques différentes les unes des autres, et la surface de la pièce en matière plastique ne présentant pas d'autre revêtement coloré ou métallique,
dans lequel les pigments à effet plaquettaires présentent au moins une couche, sur un matériau de support transparent plaquettaire, qui contient ou est constituée d'un oxyde de fer, un oxyde mixte d'oxyde de fer et d'oxyde de titane, un sous-oxyde ou un oxynitrure de titane, ou présentent une couche qui contient du carbone ou en est constituée, dans laquelle le revêtement coloré dans chaque couche du revêtement contient des pigments à effet plaquettaires en une concentration dans une plage de 5 à 40 % en poids, sur la base du poids sec de la couche respective du revêtement,
les termes « transparente au radar » signifiant un revêtement dont la permittivité est < 30 lorsqu'il est exposé à des ondes électromagnétiques ayant une fréquence de crête de 76,5 GHz.

2. Pièce en matière plastique transparente au radar selon la revendication 1, **caractérisée en ce que** le revêtement coloré présente deux à quatre couches disposées l'une au-dessus de l'autre.

3. Pièce en matière plastique transparente au radar selon la revendication 1 ou 2, **caractérisée en ce que** le revêtement coloré présente une première couche, qui est située directement sur la surface éventuellement pré-revêtue et/ou pré-traitée de la pièce en matière plastique, et présente une épaisseur de couche géométrique qui est plus grande que l'épaisseur de couche géométrique de chacune des autres couches disposées sur la première couche.

4. Pièce en matière plastique transparente au radar selon l'une ou plusieurs des revendications 1 à 3, **caractérisée en ce que**, outre les pigments à effet plaquettaires ayant des propriétés absorbantes, aucun autre pigment à effet plaquettaire n'est contenu dans le revêtement coloré.

5. Pièce en matière plastique transparente au radar selon l'une ou plusieurs des revendications 1 à 3, **caractérisée en ce que** les pigments à effet plaquettaires ayant des propriétés absorbantes sont contenus dans le revêtement coloré en mélange avec des pigments à effet plaquettaires sans propriétés absorbantes.

6. Pièce en matière plastique transparente au radar selon l'une ou plusieurs des revendications 1 à 5, **caractérisée en ce que** le revêtement coloré présente, s'il est appliqué sur toute la surface d'un substrat noir et blanc en une épaisseur totale de couche sèche de 14±2 µm et mesuré par spectrophotométrie sous un angle d'éclairage de 45° et un angle d'observation de 75°, dans un espace colorimétrique L*,a*,b*, un écart de couleur DE* entre le substrat blanc revêtu et le substrat noir revêtu dans la plage de 0 à 3.

7. Pièce en matière plastique transparente au radar selon l'une ou plusieurs des revendications 1 à 6, **caractérisée en ce que** le revêtement coloré présente, s'il est appliqué sur toute la surface d'un substrat noir et blanc en une épaisseur totale de couche sèche de 14±2 µm et mesuré par spectrophotométrie sous un angle d'éclairage de 45° et un angle d'observation de 15°, dans un espace colorimétrique L*,a*,b*, une luminosité L*15 d'au moins 80 à la fois sur le substrat blanc revêtu et le substrat noir revêtu.

8. Pièce en matière plastique transparente au radar selon l'une ou plusieurs des revendications 1 à 7, **caractérisée en ce que** le revêtement coloré présente, s'il est appliqué sur toute la surface d'un substrat noir et blanc en une épaisseur totale de couche sèche de 14±2 µm et mesuré par spectrophotométrie sous un angle d'éclairage de 45° et des angles d'observation de 45°: asl5°, 45°: as45° et 45°: as110°, à chaque fois un indice de flop d'au moins 12 sur le substrat noir revêtu.

9. Pièce en matière plastique transparente au radar selon l'une ou plusieurs des revendications 1 à 6, **caractérisée en ce que** le revêtement coloré contient, en tant que pigment à effet plaquettaire ayant des propriétés absorbantes, un pigment à effet qui présente une couleur d'absorption gris argent.

10. Pièce en matière plastique transparente au radar selon la revendication 9, **caractérisée en ce que** le pigment à effet ayant une couleur d'absorption gris argent est un pigment qui présente, sur un matériau de support transparent en forme de plaquettes, au moins une couche qui contient un oxyde de fer, un sous-oxyde de titane, un oxynitrure de titane ou un oxyde mixte d'oxyde de fer et d'oxyde de titane, ou présente une couche qui contient du carbone ou est constituée de carbone.

11. Pièce en matière plastique transparente au radar selon l'une ou plusieurs des revendications 1 à 10, **caractérisée en ce que** le revêtement coloré présente une épaisseur totale de couche sèche dans la plage de 8 à 25 µm.

12. Pièce en matière plastique transparente au radar selon l'une ou plusieurs des revendications 1 à 11, **caractérisée en ce que** la pièce en matière plastique est une plaque ou une feuille de matière plastique, la pièce en matière plastique pouvant présenter éventuellement une forme extérieure tridimensionnelle.

13. Pièce en matière plastique transparente au radar selon l'une ou plusieurs des revendications 1 à 12, **caractérisée en ce qu'**au moins une couche supplémentaire se trouve au-dessus du revêtement coloré.

14. Pièce en matière plastique transparente au radar selon la revendication 13, **caractérisée en ce que** la couche supplémentaire est une couche de vernis transparent la plus extérieure.

15. Pièce en matière plastique transparente au radar selon l'une ou plusieurs des revendications 1 à 14, **caractérisée en ce que** la surface de la pièce en matière plastique est prérevêtue par une couche d'apprêt et/ou une couche de charges et/ou est prétraitée électrostatiquement.

16. Procédé de fabrication d'une pièce en matière plastique transparente au radar selon les revendications 1 à 15, **caractérisé en ce qu'**on applique, sur une surface éventuellement pré-revêtue et/ou pré-traitée d'une pièce en matière plastique, un revêtement coloré qui est exempt de pigments à effet métallique et contient des pigments à effet plaquettaires présentant des propriétés absorbantes, **caractérisé en ce que** le revêtement coloré est appliqué en plusieurs couches disposées l'une au-dessus de l'autre, les pigments à effet plaquettaire présentant des propriétés absorbantes étant contenus dans chaque couche et au moins deux des couches présentant des épaisseurs de couches géométriques différentes les unes des autres, et la surface de la pièce en matière plastique ne présentant pas d'autre revêtement coloré ou métallique,
dans lequel les pigments à effet plaquettaires présentent au moins une couche, sur un matériau de support transparent plaquettaire, qui contient ou est constituée d'un oxyde de fer, un oxyde mixte d'oxyde de fer et d'oxyde de titane, un sous-oxyde ou un oxynitrure de titane, ou présentent une couche qui contient du carbone ou en est constituée,
dans laquelle le revêtement coloré dans chaque couche du revêtement contient des pigments à effet plaquettaires en une concentration dans une plage de 5 à 40 % en poids, sur la base du poids sec de la couche respective du revêtement,
les termes « transparente au radar » signifiant un revêtement dont la permittivité est < 30 lorsqu'il est exposé à des ondes électromagnétiques ayant une fréquence de crête de 76,5 GHz.

17. Procédé selon la revendication 16, **caractérisé en ce que** le revêtement coloré est appliqué avec une épaisseur totale de couche sèche dans la plage de 8 à 25 µm.

18. Procédé selon une ou plusieurs des revendications 16 à 17, **caractérisé en ce que** l'application du revêtement coloré est effectuée par un procédé de pulvérisation, un procédé d'application de revêtement au rouleau, un procédé de revêtement au rideau, un procédé de moulage ou par un procédé d'application électrostatique.

19. Procédé selon la revendication 18, **caractérisé en ce que** l'application du revêtement coloré est réalisée par un procédé de pulvérisation en deux à quatre étapes partielles de la manière suivante, **en ce que** deux à quatre couches sont appliquées l'une après l'autre et à chaque fois l'une au-dessus de l'autre, la quantité des pigments à effet plaquettaires présentant des propriétés absorbantes dans chacune des couches étant d'au moins 5 % en poids, par rapport au poids sec de la couche respective, et un séchage à une température d'au moins 20 °C est réalisé après l'application de chaque couche.

20. Procédé selon une ou plusieurs des revendications 16 à 19, **caractérisé en ce qu'**au moins une des couches du revêtement coloré présente une épaisseur de couche sèche < 5 µm.

21. Procédé selon l'une ou plusieurs des revendications 16 à 20, **caractérisé en ce que** la surface de la pièce en matière plastique est prérevêtue par une couche d'apprêt et/ou d'une couche de charge et/ou est prétraitée électrostatiquement.

22. Procédé selon l'une ou plusieurs des revendications 16 à 21, **caractérisé en ce qu'**une couche de vernis transparent est appliquée en tant que couche la plus extérieure sur la surface du revêtement coloré.

23. Procédé selon l'une ou plusieurs des revendications 16 à 22, **caractérisé en ce que** la pièce en matière plastique est une plaque ou une feuille en matière plastique, la pièce en matière plastique pouvant présenter éventuellement une forme extérieure tridimensionnelle.

24. Utilisation d'une pièce en matière plastique transparente au radar selon une ou plusieurs des revendications 1 à 15 comme pièce automobile.

25. Pièce automobile constituée d'une pièce en matière plastique transparente au radar selon une ou plusieurs des revendications 1 à 15.
